# EUROPEAN PATENT APPLICATION

(11) **EP 4 513 642 A1**
(43) Date of publication of application: **26.02.2025**
(21) Application number: 23812121.4
(22) Date of filing: 23.05.2023
(51) Int. Cl.: H01M 50/20, H01M 50/271

(54) **BATTERY MODULE CASE AND BATTERY MODULE COMPRISING SAME**

(30) Priority: 27.05.2022 KR 20220065689; 15.05.2023 KR 20230062507
(71) Applicant: LG Energy Solution, Ltd., Seoul 07335 (KR)
(72) Inventor: LEE, Hyun Jae, Daejeon 34122 (KR); KIM, Soo Youl, Daejeon 34122 (KR); LEE, Chang Je, Daejeon 34122 (KR); HAN, Min Hee, Daejeon 34122 (KR)
(74) Representative: Plasseraud IP
(86) International application number: PCT/KR2023/007010
(87) International publication number: WO 2023/229347

(57) **Abstract**

A battery module case according to an embodiment of the present invention may improve a welding defect through a stepped structure so that bonding force between components of the case increases to increase yield of a battery module.

## Description

### TECHNICAL FIELD

The present application claims the benefit of the priority of Korean Patent Application Nos. 10-2022-0065689, filed on May 27, 2022, and 10-2023-0062507, filed on May 15, 2023, which are hereby incorporated by reference in their entirety.

The present invention relates to a battery module case and a battery module including the same.

### BACKGROUND ART

In general, types of secondary batteries include nickel-cadmium batteries, nickel-hydrogen batteries, lithium-ion batteries, lithium-ion polymer batteries, and the like. These secondary batteries are applied to and used in not only small-sized products such as digital camera, P-DVD, MP3P, mobile phone, PDA, portable game device, power tool and E-bike, but also large-sized products such as electric vehicle and hybrid vehicle, which require high output, energy storage systems for storing surplus generated electricity or new renewable energy, and energy storage systems for backup.

In order to manufacture these secondary batteries, a positive electrode current collector and a negative electrode current collector are coated with electrode active material slurry to make a positive electrode and a negative electrode, and then the positive electrode and the negative electrode are stacked at both sides of a separator to provide an electrode assembly having a predetermined shape. Thereafter, a battery case accommodates the electrode assembly and is sealed after injection of an electrolyte.

As above, the battery case accommodates the electrode assembly and is injected with the electrolyte to manufacture a battery cell. A plurality of battery cells are accommodated in a frame-shaped case to be protected from an external impact, heat, vibration, and the like, in a state of being coupled to each other. Accordingly, a battery module may be manufactured, and then a control component such as a battery management system (BMS) may be provided in the battery module to complete a battery pack.

During the processes of accommodating the battery cells in a battery module case and welding the battery module case, there is a problem that a welding defect occurs to reduce the yield of the battery module. Thus, there is a need for the battery module case having a structure that is capable of easily performing welding on the battery module case and increasing bonding force of the welding.

### DISCLOSURE OF THE INVENTION

### TECHNICAL PROBLEM

An object of the present invention for solving the above problems is to provide a battery module case that improves a welding defect.

### TECHNICAL SOLUTION

A battery module case according to an embodiment of the present invention may include: a main body including a bottom plate, and a pair of side plates connected to both lateral portions of the bottom plate, respectively; an end plate that covers each of a front surface and a rear surface of the main body, which are disposed at front and rear sides, respectively, in a longitudinal direction of the bottom plate, to be connected to the main body; and a cover plate that covers one surface of the main body, which is parallel to the longitudinal direction of the bottom plate, to be connected to the main body, wherein one side of the bottom plate, which is connected to the end plate, is provided to be stepped.

The bottom plate may include a body portion, and a stepped portion provided to be stepped on each of both ends of the body portion.

The end plate may be coupled and connected to the stepped portion.

The end plate may include a coupling portion that is recessed to correspond to a shape of the stepped portion.

The coupling portion may have a first surface, which is connected to a bottom surface of the end plate and perpendicular to the bottom surface, and a second surface, which is connected to the first surface and perpendicular to the first surface, based on when the side plate is viewed, wherein the stepped portion is coupled to each of the first surface and the second surface so that the end plate and the main body are coupled to each other.

The stepped portion may be provided to be stepped toward a center of the body portion on each of both sides of the body portion, based on when the side plate is viewed, and each of the front surface and the rear surface may be provided through the stepped portion and the side plate.

The stepped portion may have a thickness that is greater than a thickness of the body portion.

The thickness of the stepped portion may be 1.2 mm or greater.

### ADVANTAGEOUS EFFECTS

According to the preferred embodiments of the present invention, the welding defect may be improved to increase the bonding force between the components of the case and increase the yield of the battery module.

In addition, the effects may be included which could be easily predicted by those skilled in the art from the configurations according to the preferred embodiments of the present invention.

### BRIEF DESCRIPTION OF THE DRAWINGS

The following drawings attached in this specification illustrate a preferred embodiment of the present invention and function to make further understood the technical spirit of the present invention along with the detailed description of the invention. The present invention should not be construed as being limited to only the drawings.
FIG. 1 is a perspective view of a battery module case according to an embodiment of the present invention.
FIG. 2 is an exploded view of a battery module case according to an embodiment of the present invention.
FIG. 3 is a perspective view of a main body according to an embodiment of the present invention.
FIG. 4 is a cross-sectional view of the battery module case, taken along line AA' in FIG. 1.

### MODE FOR CARRYING OUT THE INVENTION

Hereinafter, preferred embodiments of the present invention will be described in detail with reference to the accompanying drawings to enable those skilled in the art to which the present invention pertains to easily carry out the present invention. The present invention may, however, be embodied in different forms and should not be construed as limited by the embodiments set forth herein.

The parts unrelated to the description, or the detailed descriptions of related well-known art that may unnecessarily obscure subject matters of the present invention, will be ruled out in order to clearly describe the present invention. Like reference numerals refer to like elements throughout the whole specification.

Moreover, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

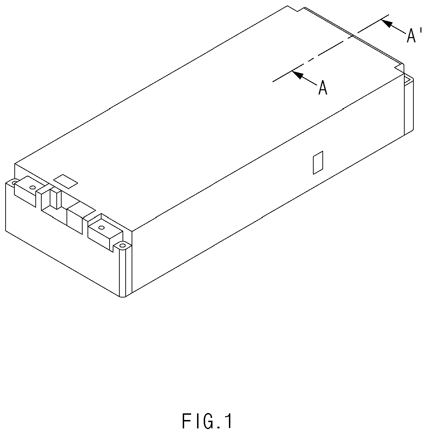

FIG. 1 is a perspective view of a battery module case 10 according to an embodiment of the present invention.

Referring to FIG. 1, the battery module case 10 may have an accommodating space defined therein to accommodate a cell assembly to be described later. The battery module case 10 may accommodate the cell assembly to protect the cell assembly from an external environment such as an external impact and heat. In addition, the battery module case 10 may be manufactured by accommodating the cell assembly therein in a state, in which one surface thereof is opened, and assembling and welding an opened portion. For example, in a rectangular parallelepiped frame having a front surface M1 and a rear surface M2 that are opened, the front surface M1 and the rear surface M2 may be covered and welded to manufacture the battery module case 10. During the welding of the battery module case 10, the battery module case 10 may be more stably welded through a structure in which a portion of the battery module case 10 is stepped. Specifically, a thickness of each of portions to be welded may be adjusted so that bonding force between components of the battery module case 10 further increases.

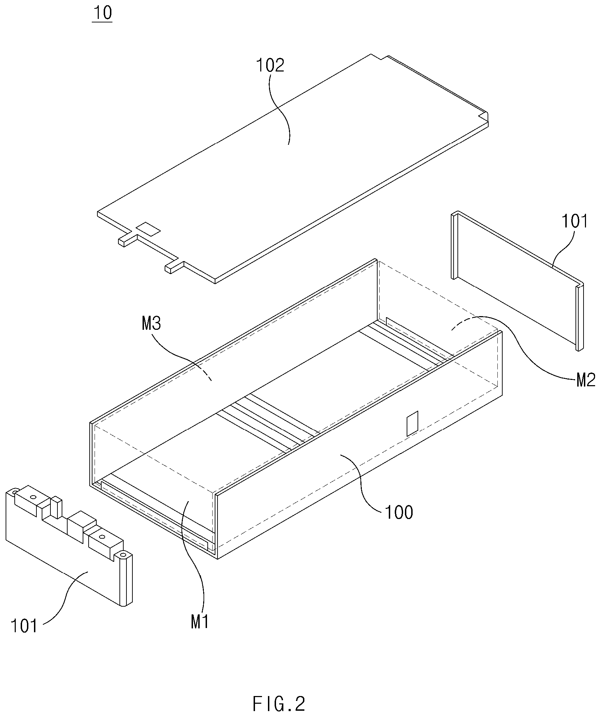

FIG. 2 is an exploded view of the battery module case 10 according to an embodiment of the present invention.

Referring to FIG. 2, the battery module case 10 may include a main body 100, an end plate 101, and a cover plate 102.

The main body 100 may be a frame that serves as reference for manufacture of the battery module case 10. In other words, the main body 100 is a frame having a shape having one side opened, and may be a frame that defines the accommodating space and is assembled with the end plate 101 and the cover plate 102, which will be described later. Specifically, the main body 100 may have a longitudinal direction, and include a rectangular parallelepiped structure in which the front surface M1 and the rear surface M2 are opened in the longitudinal direction. In addition, the main body 100 may include a structure in which one surface M3 parallel to the longitudinal direction is opened. According to such a structure, the main body 100 may have a shape in which three surfaces of a rectangular parallelepiped shape are opened.

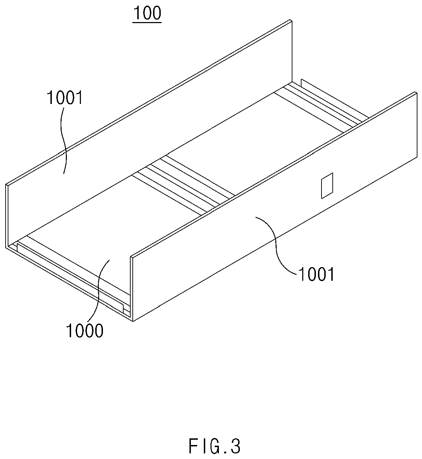

FIG. 3 is a perspective view of the main body 100 according to an embodiment of the present invention.

Referring to FIG. 3, the main body 100 may include a bottom plate 1000 and a side plate 1001. For example, the bottom plate 1000 may constitute a bottom surface of the main body 100. In a state in which the bottom plate 1000 constitutes the bottom surface of the main body 100, the side plate 1001 may be connected to each of both lateral portions of the bottom plate 1000. In other words, a pair of side plates 1001 may be connected to both the lateral portions of the bottom plate 1000, respectively, in a longitudinal direction of the bottom plate 1000. In this case, the side plate 1001 may be perpendicularly connected to the bottom plate 1000. As a result, the front surface M1 and the rear surface M2, each of which is defined by one side of the bottom plate 1000 and one side of each of the pair of side plates 1001, may be provided.

The bottom plate 1000 may have a portion stepped. For example, the bottom plate 1000 may include a body portion 1000a and a stepped portion 1000b. The body portion 1000a may be disposed at a central portion of the bottom plate 1000, and have a plate shape having a uniform thickness. The stepped portion 1000b is a portion connected to each of both ends of the body portion 1000a, and may have a stepped shape. Specifically, the stepped portions 1000b may be connected not to both ends of the body portion 1000a, which are connected to the side plates 1001, but to both ends of the body portion 1000a, which are connected to the end plates 101, respectively. In other words, the stepped portions 1000b may be connected to both ends of the body portion 1000a, which constitute the front surface M1 and the rear surface M2 described above, respectively. That is, each of the front surface M1 and the rear surface M2 may be provided through the stepped portion 1000b and the side plate 1001.

More specifically, the stepped portion 1000b may be provided to be stepped toward a center of the body portion 1000a on each of both sides of the body portion 1000a, based on when the side plate 1001 is viewed. In addition, the stepped portion 1000b may have a thickness that is greater than a thickness of the body portion 1000a. That is, the bottom plate 1000 may have a structure in which the stepped portion 1000b on each of both the sides of the body portion 1000a protrudes upward in a state in which the body portion 1000a is disposed at a center, based on when the side plate 1001 is viewed.

The end plate 101 may be connected to the main body 100 to cover the front surface M1 and the rear surface M2 of the main body 100. In other words, the end plate 101 may be provided in a pair, and the pair of end plates 101 may be disposed at front and rear sides, respectively, of the main body 100 to be connected to the main body 100.

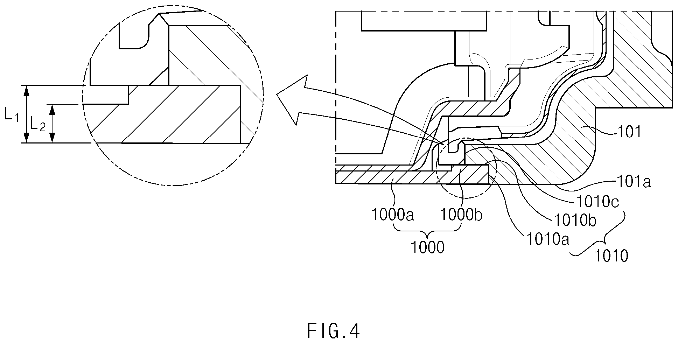

FIG. 4 is a cross-sectional view of the battery module case, taken along line AA' in FIG. 1.

Referring to FIG. 4, the end plate 101 may be coupled and connected to the stepped portion 1000b. Specifically, the end plate 101 may include a coupling portion 1010 that is recessed to correspond to the shape of the stepped portion 1000b. For example, the coupling portion 1010 may have a first surface 1010a, a second surface 1010b, and a third surface 1010c, based on when the side plate 1001 is viewed.

The first surface 1010a may be connected to a bottom surface 101a of the end plate 101 and perpendicular to the bottom surface 101a. In addition, the second surface 1010b may be connected to the first surface 1010a and perpendicular to the first surface 1010a. Lastly, the third surface 1010c may be connected to the second surface 1010b and perpendicular to the second surface 1010b. In this case, in a state in which an extension line of the bottom surface 101a of the end plate 101 matches an extension line of a bottom surface of the stepped portion 1000b, the stepped portion 1000b may be inserted toward the first surface 1010a to be coupled and welded to each of the first surface 1010a and the second surface 1010b so that the end plate 101 and the main body 100 are coupled to each other.

Hereinafter, the contents and results of experiments for measuring weldability between the main body 100 and the end plate 101 will be described. Specifically, during the welding of the stepped portion 1000b to the end plate 101, a length of an occurring welding defect is measured.

More specifically, a drain hole is defined in a central portion of the stepped portion 1000b, and a portion to be welded is provided at each of both sides of the drain hole in the stepped portion 1000b. In this case, a welding portion at one side has a length of 85 mm. In the experiments, when the welding portion at the one side is welded, a length of a welding defect occurring according to a thickness L₁ of the stepped portion 1000b is measured.

The results of measuring the length of the welding defect occurring according to the thickness L₁ of the stepped portion 1000b are shown in Table 1 below.

**[Table 1]**

| L₁ | Welding defect length |
|---|---|
| 1.2 mm | 0.78 mm |
| 1.1 mm | 3.45 mm |
| 0.9 mm | 15.98 mm |

Referring to Table 1, when the thickness L₁ of the stepped portion 1000b is 1.1 mm or greater, it may be confirmed that the welding defect length noticeably decreases. Accordingly, the thickness L₁ of the stepped portion 1000b may be 1.1 mm or greater. Preferably, the thickness L₁ of the stepped portion 1000b may be 1.2 mm or greater. When the thickness L₁ of the stepped portion 1000b is 1.2 mm or greater, it may be confirmed that the welding defect length remarkably decreases.

In addition, considering a thickness of a bonded portion of the end plate 101, the thickness L₁ of the stepped portion 1000b may be 1.5 mm or less. A sum of the thickness of the stepped portion 1000b and the thickness of the end plate 101 may be 3 mm, based on a cross section viewed in FIG. 4. In other words, as the thickness of the stepped portion 1000b increases, the thickness of the end plate 101 may decrease.

When the thickness L1 of the stepped portion 1000b is greater than 1.5 mm, the thickness of the end plate 101 may decrease to cause a problem that weld bondability is rather reduced due to fusing and welding by introduction from the stepped portion 1000b into the end plate 101. That is, in order to secure a weld depth, the thickness L₁ of the stepped portion 1000b may not be greater than the thickness of the end plate 101.

As a result, when the thickness L₁ of the stepped portion 1000b of the bottom plate 1000 according to an embodiment of the present invention is designed to be 1.2 mm to 1.5 mm, the weldability between the bottom plate 1000 and the end plate 101 may be greatly improved.

As above, as the thickness of the stepped portion 1000b is adjusted with respect to the body portion 1000a, the main body 100 and the end plate 101 may be welded to each other by higher binding force, and due the higher binding force, the battery module case 10 may be prevented from being broken so that the yield of the battery module greatly increases.

The cover plate 102 may be connected to the main body 100 to cover the one surface M3 of the main body 100, which is parallel to the longitudinal direction of the bottom plate 1000. For example, the one surface M3 may mean a top surface M3. In this case, the cover plate 102 may be connected to the main body 100 to cover the opened top surface M3 of the main body 100.

Hereinafter, a battery module manufactured using the battery module case 10 described above will be described. In the battery module according to an embodiment of the present invention, contents duplicated with the contents about the battery module case 10 described above will be omitted.

The battery module according to an embodiment of the present invention may include a cell assembly structure accommodated inside the battery module case 10 to store electric energy and output the stored electric energy to the outside through a connecting terminal.

For example, an electrode cell, which is injected with an electrolyte and activated in a state of including an electrode assembly therein, may be provided in a plurality to manufacture the cell assembly. That is, the cell assembly may be an assembly of a plurality of batteries.

The battery module case 10 may accommodate such a cell assembly therein and be welded to block interaction between the cell assembly and an external space, so that the cell assembly is protected from an external factor such as an impact and heat.

Specifically, the battery module case 10 may include a main body 100, an end plate 101, and a cover plate 102. In addition, the main body 100 may include a bottom plate 1000 and a side plate 1001, and the bottom plate 1000 may include a body portion 1000a and a stepped portion 1000b.

As above, a thickness of the stepped portion 1000b may be adjusted to decrease a welding defect length between the main body 100 and the end plate 101 so that bonding force between the main body 100 and the end plate 101 increases. Consequently, the likelihood of breakage of the battery module may decrease, and the yield of the battery module may increase in the process for manufacturing the battery module.

The description of the present invention is intended to be illustrative, and various changes and modifications can be made by those of ordinary skill in the art to which the present invention pertains, without departing from the spirit and scope of the present invention as defined by the appended claims.

Therefore, the embodiments set forth herein are to describe the technical spirit of the present invention and not to limit. The scope of the technical spirit of the present invention is not limited by the embodiments.

Moreover, the protective scope of the present invention should be determined by reasonable interpretation of the appended claims and all technical concepts coming within the equivalency range of the present application should be interpreted to be in the scope of the right of the present application.

[Description of the Symbols]
10: Battery module case
100: Main body
101: End plate
102: Cover plate
1000: Bottom plate
1001: Side plate
1000a: Body portion
1000b: Stepped portion
1010: Coupling portion
1010a: First surface
1010b: Second surface
1010c: Third surface
101a: Bottom surface of end plate
M1: Front surface
M2: Rear surface
M3: One surface
L₁: Thickness of stepped portion
L₂: Thickness of body portion

## Claims

1. A battery module case comprising:
a main body comprising a bottom plate, and a pair of side plates connected to both lateral portions of the bottom plate, respectively;
an end plate configured to cover each of a front surface and a rear surface of the main body, which are disposed at front and rear sides, respectively, in a longitudinal direction of the bottom plate, to be connected to the main body; and
a cover plate configured to cover one surface of the main body, which is parallel to the longitudinal direction of the bottom plate, to be connected to the main body,
wherein one side of the bottom plate, which is connected to the end plate, is provided to be stepped.

2. The battery module case of claim 1, wherein the bottom plate comprises:
a body portion; and
a stepped portion provided to be stepped on each of both ends of the body portion.

3. The battery module case of claim 2, wherein the end plate is coupled and connected to the stepped portion.

4. The battery module case of claim 3, wherein the end plate comprises a coupling portion that is recessed to correspond to a shape of the stepped portion.

5. The battery module case of claim 4, wherein the coupling portion has a first surface, which is connected to a bottom surface of the end plate and perpendicular to the bottom surface, and a second surface, which is connected to the first surface and perpendicular to the first surface, based on when the side plate is viewed,
wherein the stepped portion is coupled to each of the first surface and the second surface so that the end plate and the main body are coupled to each other.

6. The battery module case of claim 2, wherein the stepped portion is provided to be stepped toward a center of the body portion on each of both sides of the body portion, based on when the side plate is viewed, and
each of the front surface and the rear surface is provided through the stepped portion and the side plate.

7. The battery module case of claim 6, wherein the stepped portion has a thickness that is greater than a thickness of the body portion.

8. The battery module case of claim 7, wherein the thickness of the stepped portion is 1.2 mm or greater.

9. A battery module comprising:
the battery module case of claim 1; and
a cell assembly accommodated inside the battery module case.
